Europäisches Patentamt

European Patent Office

Office européen des brevets

(19)

(11)  **EP 1 198 292 B1**

(12)  **FASCICULE DE BREVET EUROPEEN**

(45) Date de publication et mention
de la délivrance du brevet:
**04.08.2004  Bulletin 2004/32**

(51) Int Cl.⁷: **B01J 29/16**, C10G 47/16,
C10G 45/12

(21) Numéro de dépôt: **00929653.4**

(22) Date de dépôt: **19.05.2000**

(86) Numéro de dépôt international:
**PCT/FR2000/001389**

(87) Numéro de publication internationale:
**WO 2000/071250 (30.11.2000 Gazette 2000/48)**

(54) **CATALYSEUR COMPRENANT UNE ZEOLITHE Y PARTIELLEMENT AMORPHE, UN ELEMENT DU GROUPE VB ET SON UTILISATION EN HYDROCONVERSION ET HYDRORAFFINAGE DE CHARGES PETROLIERES HYDROCARBONEES**

EIN TEILWEISE AMORFE ZEOLIT Y ENTHALTENDER KATALYSATOR UND SEINE VERWENDUNG FÜR DIE WASSERSTOFFUMSETZUNG UND WASSERSTOFFRAFINIERUNG VON KOHLENWASSERSTOFFEINSÄTZEN

CATALYST COMPRISING A PARTIALLY AMORPHOUS ZEOLITE Y, AN ELEMENT OF GROUP V B AND ITS USE FOR HYDROCONVERTING AND HYDROREFINING HYDROCARBON OIL FEEDSTOCKS

(84) Etats contractants désignés:
**BE DE DK NL**

(30) Priorité: **19.05.1999  FR 9906445**

(43) Date de publication de la demande:
**24.04.2002  Bulletin 2002/17**

(73) Titulaire: **Institut Français du Pétrole
92852 Rueil-Malmaison Cedex (FR)**

(72) Inventeurs:
• **BENAZZI, Eric
F-78400 Chatou (FR)**
• **DEVES, Jean-Marie
F-78540 Vernouillet (FR)**
• **KASZTELAN, Slavik
F-92500 Rueil Malmaison (FR)**

(56) Documents cités:
EP-A- 0 967 012        FR-A- 2 758 278
US-A- 3 867 310        US-A- 3 886 094
US-A- 4 777 157

Remarques:
Le dossier contient des informations techniques présentées postérieurement au dépôt de la demande et ne figurant pas dans le présent fascicule.

**Description**

La présente invention concerne un catalyseur de charges hydrocarbonées, ledit catalyseur comprenant au moins une zéolithe Y partiellement amorphe au moins, un métal du groupe VB, de préférence le niobium, au moins une matrice amorphe ou mal cristallisée de type oxyde, éventuellement au moins un métal choisi parmi le groupe VIB et le groupe VIII de la classification périodique des éléments, de préférence le molybdène et le tungstène, le cobalt, le nickel et le fer. La matrice du catalyseur renferme éventuellement au moins un élément choisi dans le groupe P, B, Si et éventuellement au moins un élément du groupe VIIA (groupe 17 des halogènes) tel que par exemple le fluor.

La présente invention concerne également les procédés de préparation du dit catalyseur, ainsi que son utilisation pour l'hydrocraquage de charges hydrocarbonées telles que les coupes pétrolières, les coupes issues du charbon contenant des composés aromatiques, et/ou oléfiniques, et/ou naphténiques, et/ou paraffiniques, les dites charges contenant éventuellement des métaux, et/ou de l'azote, et/ou de l'oxygène et/ou du soufre. L'invention concerne également l'utilisation du catalyseur pour l'hydroraffinage de charges hydrocarbonées.

L'hydrocraquage de coupes pétrolières lourdes est un procédé très important du raffinage qui permet de produire, à partir de charges lourdes excédentaires et peu valorisables, les fractions plus légères telles que essences, carburéacteurs et gazoles légers que recherche le raffineur pour adapter sa production à la structure de la demande. Certains procédés d'hydrocraquage permettent d'obtenir également un résidu fortement purifié pouvant constituer une excellente base pour huiles. Par rapport au craquage catalytique, l'intérêt de l'hydrocraquage catalytique est de fournir des distillats moyens, carburéacteurs et gazoles, de très bonne qualité. L'essence produite présente un indice d'octane beaucoup plus faible que celle issue du craquage catalytique.

Les catalyseurs utilisés en hydrocraquage sont tous du type bifonctionnel associant une fonction acide à une fonction hydrogénante. La fonction acide est apportée par des supports de grandes surfaces (150 à 800 $m^2.g^{-1}$ généralement) présentant une acidité superficielle, telles que les alumines halogénées (chlorées ou fluorées notamment), les combinaisons d'oxydes de bore et d'aluminium, les silice-alumines amorphes et les zéolithes. La fonction hydrogénante est apportée soit par un ou plusieurs métaux du groupe VIII de la classification périodique des éléments, tels que fer, cobalt, nickel, ruthénium, rhodium, palladium, osmium, iridium et platine, soit par une association d'au moins un métal du groupe VI de la classification périodique tels que molybdène et tungstène et au moins un métal du groupe VIII.

L'équilibre entre les deux fonctions acide et hydrogénante est le paramètre fondamental qui régit l'activité et la sélectivité du catalyseur. Une fonction acide faible et une fonction hydrogénante forte donnent des catalyseurs peu actifs, travaillant à température en général élevée (supérieure ou égale à 390 °C), et à vitesse spatiale d'alimentation faible (la VVH exprimée en volume de charge à traiter par unité de volume de catalyseur et par heure est généralement inférieure ou égale à 2) mais dotés d'une très bonne sélectivité en distillats moyens. Inversement, une fonction acide forte et une fonction hydrogénante faible donnent des catalyseurs actifs mais présentant de moins bonnes sélectivités en distillats moyens. La recherche d'un catalyseur convenable sera donc centrée sur un choix judicieux de chacune des fonctions pour ajuster le couple activité/sélectivité du catalyseur.

Ainsi, c'est un des grands intérêts de l'hydrocraquage de présenter une grande flexibilité à divers niveaux : flexibilité au niveau des catalyseurs utilisés, qui amène une flexibilité des charges à traiter et au niveau des produits obtenus. Un paramètre aisé à maîtriser est l'acidité du support du catalyseur.

Les catalyseurs conventionnels de l'hydrocraquage catalytique sont, pour leur grande majorité, constitués de supports faiblement acides, tels les silice-alumines amorphes par exemple. Ces systèmes sont plus particulièrement utilisés pour produire des distillats moyens de très bonne qualité, et encore, lorsque leur acidité est très faible, des bases huiles.

Dans les supports peu acides, on trouve la famille des silice-alumines amorphes. Beaucoup de catalyseurs du marché de l'hydrocraquage sont à base de silice-alumine associée, soit à un métal du groupe VIII soit, de préférence quand les teneurs en poisons hétéroatomiques de la charge à traiter dépassent 0,5 % en poids, à une association de sulfures des métaux des groupes VIB et VIII. Ces systèmes ont une très bonne sélectivité en distillats moyens, et les produits formés sont de bonne qualité. Ces catalyseurs, pour les moins acides d'entre eux, peuvent également produire des bases lubrifiantes. L'inconvénient de tous ces systèmes catalytiques à base de support amorphe est, comme on l'a dit, leur faible activité.

Les catalyseurs comportant par exemple de la zéolithe Y de type structural FAU, ou les catalyseurs comportant par exemple une zéolithe de type bêta présentent quant à eux une activité catatytique supérieure à celle des silice-alumines amorphes, mais présentent des sélectivités en produits légers qui sont plus élevées. Dans l'art antérieur, les zéolithes utilisées pour la préparation des catalyseurs d'hydrocraquage sont caractérisées par plusieurs grandeurs comme leur rapport molaire $SiO_2/Al_2O_3$ de charpente, leur paramètre cristallin, leur répartition poreuse, leur surface spécifique, leur capacité de reprise en ion sodium, ou encore leur capacité d'adsorption de vapeur d'eau. Ainsi dans des brevets précédents du demandeur (brevets français FR-A 2,754,742, FR-A-2,764,828) il est utilisé une zéolithe dont le paramètre cristallin est compris entre 24,16 et 24,38A, le rapport molaire $SiO_2/Al_2O_3$ de charpente compris

entre 500 et 21, la teneur en sodium inférieure à 0,15% poids, la capacité de reprise en ion sodium supérieure à 0,85g Na/100g zéolithe, la surface spécifique supérieure à 400m$^2$/g, la capacité d'adsorption de vapeur d'eau supérieure à 6% et 1 et 20% du volume poreux contenu dans des pores de diamètre situé entre 20 et 80A.

Dans tous les cas de l'art antérieur, les zéolithes utilisées présentent des fractions cristallines (ou degré de cristallinité) et des taux de pics élevés.

Par ailleurs, des sulfures simples d'éléments du groupe VB ont été décrits en tant que constituants de catalyseurs d'hydroraffinage de charges hydrocarbonées, comme par exemple le trisulfure de niobium dans le brevet US-A-5,294,333. Des mélanges de sulfures simples comprenant au moins un élément du groupe VB et un élément du groupe VIB ont également été testés comme constituants de catalyseurs d'hydroraffinage de charges hydrocarbonées, comme par exemple dans le brevet US-A-4.910.181 ou le brevet US-A-5.275.994. Le brevet US-A-4,777.157 décrit un catalyseur comprenant un composé du niobium et un composant de craquage qui peut être une zéolite Y, et son utilisation en hydrocraquage pour produire des essences et kérosène.

Les procédés actuels d'hydroraffinage catalytique utilisent des catalyseurs capables de promouvoir les principales réactions utiles à la mise en valeur des coupes lourdes, en particulier l'hydrogénation des noyaux aromatiques (HAR), l'hydrodésulfuration (HDS) l'hydrodéazotation (HDN) et autres hydroéliminations. L'hydroraffinage est employé pour traiter des charges telles que les essences, les gazoles sous vide, les résidus atmosphériques ou sous vide, désasphaltés ou non. Par exemple, il est tout indiqué pour le traitement des charges des procédés de craquage et d'hydrocraquage catalytiques. Les composés hétérocycliques azotés rencontrés dans les fractions lourdes se comportent comme des poisons à la toxicité très marquée pour les catalyseurs de craquage ou d'hydrocraquage. En conséquence, la déazotation des charges d'hydrocraquage catalytique constitue un des moyens possible pour améliorer le rendement global de ces procédés, il est alors souhaitable de diminuer au maximum la teneur en azote des charges avant de les craquer. Au moins une étape d'hydroraffinage est habituellement intégrée dans chacun des schémas connus de valorisation des coupes pétrolières lourdes.

Les travaux de recherche effectués par le demandeur sur de nombreuses zéolithes et solides microporeux et sur les phases actives hydrogénantes, l'ont conduit à découvrir que, de façon surprenante, il est obtenu des sélectivités en distillats moyens (kérosène + gasoil), plus élevées qu'avec les catalyseurs connus dans l'art antérieur contenant une zéolithe Y en utilisant un catalyseur selon l'invention qui comprend au moins une zéolithe Y partiellement amorphe, au moins une matrice minérale amorphe ou mal cristallisée, généralement poreuse telle que l'alumine, au moins un élément du groupe VB de la Classification périodique des éléments, tels que le tantale, le niobium ou le vanadium, de préférence le niobium, et éventuellement au moins un élément du groupe VIB de ladite Classification, tels que le chrome, le molybdène ou le tungstène, de préférence le molybdène ou le tungstène, de façon encore plus préférée le molybdène, éventuellement un élément du groupe VIII, c'est-à-dire un élément choisi dans le groupe constitué par : Fe, Ru, Os, Co, Rh, Ir, Ni, Pd, Pt, de préférence le fer, le cobalt ou nickel, éventuellement un élément choisi dans le groupe formé par P, B et Si, éventuellement un élément du groupe VIIA, et de préférence le fluor.

On a pu observer que ce catalyseur présente une activité en hydrocraquage et en dydroraffinage plus importante que celles des formules catalytiques connues de l'art antérieur.

Le catalyseur de la présente invention renferme généralement en % poids par rapport à la masse totale du catalyseur :

- 0,1 à 99,8%, de préférence de 0,1 à 90% et de manière encore plus préférée de 0,1 à 80% d'une zéolithe Y partiellement amorphe,
- 0,1 à 60%, de préférence de 0,1 à 50% et de manière encore plus préférée de 0,1 à 40% d'au moins un métal choisi dans le groupe VB,
- 0,1 à 99,8 %, de préférence de 0,1 à 99%, de préférence de 1 à 98 % d'une matrice minérale poreuse amorphe ou mal cristallisée de type oxyde le dit catalyseur étant caractérisé en ce qu'il renferme éventuellement :
- 0 à 60%, avantageusement de 0,1 à 60 %,de préférence de 0,1 à 50% et de manière encore plus préférée de 0,1 à 40% d'au moins un métal hydro-déshydrogénant de préférence choisi parmi les éléments du groupe VIII et du groupe VIB.
- 0 à 20%, de préférence de 0,1 à 15% et de manière encore plus préférée de 0,1 à 10% d'au moins un élément promoteur choisi dans le groupe constitué par le silicium, le bore et le phosphore, non compris le silicium éventuellement contenu dans la charpente de la zéolithe, de préférence l'élément est le bore et/ou le silicium,
- 0 à 20%, de préférence de 0,1 à 15% et de manière encore plus préférée de 0,1 à 10% d'au moins un élément choisi dans le groupe VIIA, de préférence le fluor.

La zéolithe Y partiellement amorphe, utilisée dans la présente invention est un solide présentant les caractéristiques suivantes :

- il un taux de pic qui est inférieur à environ 0,40 de préférence inférieur à environ 0,30,

- ii/ une fraction cristalline exprimée par rapport à une zéolithe Y de référence sous forme sodique (Na) qui est inférieure à environ 60%, de préférence inférieur à environ 50%,

De préférence, les zéolithes Y partiellement amorphes, solides entrant dans la composition du catalyseur selon l'invention présentent l'une au moins (et de préférence toutes) des autres caractéristiques suivantes :

- iii/ un rapport Si/Al global supérieur à 15, de préférence supérieur à 20 et inférieur à 150,
- iv/ un rapport Si/Al$^{IV}$ de charpente supérieur ou égal au rapport Si/Al global,
- v/ un volume poreux au moins égal à 0,20 ml/g de solide dont une fraction, comprise entre 8% et 50%, est constituée de pores ayant une diamètre d'au moins 5 nm (nanomètre) soit 50 Å.
- vi/ une surface spécifique de 210-800 m$^2$/g, de préférence 250-750 m$^2$/g et avantagement 300-600 m$^2$/g

Les taux de pics et les fractions cristallines sont déterminés par diffraction des rayons X, en utilisant une procédure dérivée de la méthode ASTM D3906-97 « Determination of Relative X-ray Diffraction Intensities of Faujasite-Type-Containing Materials ». On pourra se référer à cette méthode pour les conditions générales d'application de la procédure et, en particulier, pour la préparation des échantillons et des références.

Un diffractogramme est composé des raies caractéristiques de la fraction cristallisée de l'échantillon et d'un fond, provoqué essentiellement par la diffusion de la fraction amorphe ou microcristalline de l'échantillon (un faible signal de diffusion est lié à l'appareillage, air, porte-échantillon, etc.) Le taux de pics d'une zéolithe est le rapport, dans une zone angulaire prédéfinie (typiquement 8 à 40° 2θ lorsqu'on utilise le rayonnement Kα du cuivre, l = 0,154 nm). de l'aire des raies de la zéolithe (pics) sur l'aire globale du diffractogramme (pics+fond). Ce rapport pics/(pics+fond) est proportionnel à la quantité de zéolithe cristallisée dans le matériau.

Pour estimer la fraction cristalline d'un échantillon de zéolithe Y, on comparera le taux de pics de l'échantillon à celui d'une référence considérée comme 100% cristallisée (NaY par exemple). Le taux de pics d'une zéolithe NaY parfaitement cristallisée est de l'ordre de 0,55 à 0,60.

Le taux de pics d'une zéolithe USY classique est de 0,45 à 0,55, sa fraction cristalline par rapport à une NaY parfaitement cristallisée est de 80 à 95 %. Le taux de pics du solide faisant l'objet de la présente invention est inférieur à 0,40 et de préférence inférieur à 0,35. Sa fraction cristalline est donc inférieure à 70 %, de préférence inférieure à 60%. Les zéolites partiellement amorphes sont préparées par les techniques généralement utilisées pour la désalumination, à partir de zéolites Y disponibles commercialement, c'est-à-dire qui présentent généralement des cristallinités élevées (au moins 80%). Plus généralement on pourra partir de zéolites ayant une fraction cristalline d'au moins 60%, ou d'au mooins 70%.

Les zéolithes Y utilisées généralement dans les catalyseurs d'hydrocraquage sont fabriquées par modification de zéolithe Na-Y disponible commercialement. Cette modification permet d'aboutir à des zéolithes dites stabilisées, ultra-stabilisées ou encore désaluminées. Cette modification est réalisée par l'une au moins des techniques de désalumination, et par exemple le traitement hydrothermique, l'attaque acide. De préférence, cette modification est réalisée par combinaison de trois types d'opérations connues de l'homme de l'art : le traitement hydrothermique, l'échange ionique et l'attaque acide. Le traitement hydrothermique est parfaitement défini par la conjonction des variables opératoires que sont la température, la durée, la pression totale et la pression partielle de vapeur d'eau. Ce traitement a pour effet d'extraire de la charpente silico-aluminique de la zéolithe des atomes d'aluminium. La conséquence de ce traitement est une augmentation du rapport molaire SiO2/Al2O3 de charpente et une diminution du paramètre de la maille cristalline.

L'échange ionique se déroule généralement par immersion de la zéolithe dans une solution aqueuse contenant des ions susceptibles de se fixer sur les sites d'échange cationique de la zéolithe. On enlève ainsi les cations sodium présent dans la zéolithe après cristallisation.

L'opération d'attaque acide consiste à mettre la zéolithe au contact d'une solution aqueuse d'un acide minéral. La sévérité de l'attaque acide est ajustée par la concentration en acide, la durée et la température. Réalisé sur une zéolithe traitée hydrothermiquement, ce traitement a pour effet d'éliminer les espèces aluminiques extraites de la charpente et qui bouchent la microporosité du solide.

La zéolithe Y partiellement amorphe utilisée dans les catalyseurs selon l'invention est au moins en partie sous forme hydrogène ou acide (H+) ou ammonium (NH4+) ou cationique, ledit cation étant choisi dans le groupe formé par les groupes IA, IB, IIA, IIB, IIIA, IIIB (y compris les terres rares), Sn, Pb et Si, elle est de préférence au moins en partie sous forme H+ ou elle peut aussi être utilisée au moins en partie sous forme cationique (telle que définie ci-dessus).

On emploiera de préférence la zéolithe Y partiellement amorphe au moins en partie sous forme acide (et de préférence en totalité sous forme H) ou partiellement échangée avec des cations, par exemple des cations alcalins et/ou alcalino-terreux.

Le catalyseur qui comprend au moins une zéolithe Y partiellement amorphe, renferme en outre une fonction hydrogénante. La fonction hydrogénante telle qu'elle a été définie précédemment, comporte de préférence au moins un métal choisi dans le groupe formé par les métaux du groupe VIB et du groupe VIII de la classification périodique des éléments.

Dans une mise en oeuvre de l'invention, le catalyseur renferme de préférence au moins un élément choisi dans le groupe formé par le bore, le silicium et le phosphore. Le catalyseur renferme éventuellement au moins un élément du groupe VIIA, de préférence le chlore et le fluor, et encore éventuellement au moins un élément du groupe VIIB.

Le bore, le silicium et/ou le phosphore peuvent être dans la matrice, la zéolithe ou sont de préférence déposés sur le catalyseur et alors principalement localisés sur la matrice.

L'élément introduit, et en particulier le silicium, principalement localisé sur la matrice du support peut être caractérisé par des techniques telles que la microsonde de Castaing (profil de répartition des divers éléments), la microscopie électronique par transmission couplée à une analyse X des composants du catalyseurs, ou bien encore par l'établissement d'une cartographie de répartition des éléments présents dans le catalyseur par microsonde électronique.

Les métaux du groupe VB, VIB et du groupe VIII du catalyseur de la présente invention peuvent être présent en totalité ou partiellement sous la forme métallique et/ou oxyde et/ou sulfure.

La matrice minérale poreuse, habituellement amorphe ou mal cristallisée, est en général constituée d'au moins un oxyde réfractaire sous forme amorphe ou mal cristallisée. Ladite matrice est préférentiellement choisie dans le groupe formé par l'alumine, la silice, la silice-alumine, ou un mélange de aux moins deux des oxydes cités ci dessus. On peut choisir également les aluminates. On préfère utiliser des matrices contenant de l'alumine, sous toutes ces formes connues de l'homme du métier, par exemple l'alumine gamma.

Les catalyseurs selon l'invention peuvent être préparés selon toutes les méthodes bien connues de l'homme du métier.

Un procédé préféré de préparation du catalyseur selon la présente invention comprend les étapes suivantes :

a) on sèche et on pèse un solide ci-après dénommé le précurseur, renfermant au moins les composés suivants : au moins une matrice, au moins une zéolithe Y partiellement amorphe, éventuellement au moins un élément choisi par les éléments du groupe VIB et du groupe VIII, éventuellement au moins un élément choisi dans le groupe phosphore, bore et silicium, éventuellement au moins un élément du groupe VIIA, le tout étant de préférence mis en forme,

b) le solide sec obtenu à l'étape a) est calciné à une température d'au moins 150°C.

c) on imprègne le solide précurseur défini à l'étape b), par une solution contenant un élément du groupe VB, de préférence le niobium,

d) on laisse reposer le solide humide sous une atmosphère humide à une température comprise entre 10 et 120°C,

e) on sèche le solide humide obtenu à l'étape d) à une température comprise entre 60 et 150°C,

La préparation du précurseur de l'étape a) ci-dessus peut être réalisée selon toutes les méthodes classiques de l'homme du métier. Selon un autre procédé de préparation préféré, le précurseur est obtenu par mélange d'au moins une matrice et d'au moins une zéolithe Y partiellement amorphe puis mise en forme, séchage et calcination. Les éléments des groupes VIB, VIII, et ceux du choisi parmi phosphore, le bore, le silicium et les éléments du groupe VIIA, sont alors éventuellement introduits par toutes méthode connue de l'homme du métier, à l'une quelconque des étapes a) à e), avant ou après la mise en forme et avant ou après la calcination du précurseur ou du catalyseur.

La mise en forme peut être réalisée par exemple par extrusion, par pastillage, par la méthode de la goutte d'huile (oil-drop), par granulation au plateau tournant ou par toute autre méthode bien connue de l'homme du métier. Au moins une calcination peut être effectuée après l'une quelconque des étapes de la préparation, elle est habituellement effectuée sous air à une température d'au moins 150°C, de préférence au moins 300°C. Ainsi, le produit obtenu à l'issue de l'étape a) et/ou de l'étape e) et/ou éventuellement après introduction du ou des éléments des groupes VIB, VIII, ceux choisis parmi le phosphore, le bore, le silicium, et les éléments du groupe VIIA, est alors éventuellement calciné sous air, usuellement à une température d'au moins 150°C, de préférence au moins 250°C, couramment d'environ 350 à 1000°C.

L'élément hydrogénant peut être introduit à toute étape de la préparation, de préférence lors du mélange, ou de manière très préférée après mise en forme. La mise en forme est suivie d'une calcination, l'élément hydrogénant peut également être introduit avant ou après cette calcination. La préparation se termine généralement par une calcination à une température de 250 à 600°C. Une autre des méthodes préférées selon la présente invention consiste à malaxer au moins une zéolithe Y partiellement amorphe, dans un gel humide d'alumine pendant quelques dizaines de minutes, puis à passer la pâte ainsi obtenue à travers une filière pour former des extrudés de diamètre compris entre 0,4 et 4 mm. La fonction hydrogénante peut être alors introduite en partie seulement (cas, par exemple, des associations d'oxydes de métaux des groupes VIB et VIII) ou en totalité, au moment du malaxage d'au moins une zéolithe Y partiellement amorphe, avec au moins un gel d'oxyde choisi comme matrice. Elle peut également être introduite par une ou plusieurs opérations d'échange ionique sur le support calciné constitué d'au moins une zéolithe Y partiellement amorphe, dispersée dans au moins une matrice, à l'aide de solutions contenant les sels précurseurs des métaux choisis lorsque ceux-ci appartiennent au groupe VIII. Elle peut aussi être introduite par une ou plusieurs opérations d'imprégnation du support' mis en forme et calciné, par une solution des précurseurs des oxydes des métaux des groupes VIII (notamment le cobalt et le nickel) lorsque les précurseurs des oxydes des métaux du groupe VIB (notamment le molybdène ou le tungstène) ont été préalablement introduits au moment du malaxage du support. Elle peut enfin également être introduite par une ou plusieurs opérations d'imprégnation du support calciné constitué d'au moins une zéolithe Y partiellement amorphe et d'au moins une matrice, par des solutions contenant les précurseurs des oxydes de métaux des groupes VI et/ou VIII, les précurseurs des oxydes de métaux de groupe VIII étant de préférence introduits après ceux du groupe VIB ou en même temps que ces derniers.

D'une façon préférée, le support est imprégné par une solution aqueuse. L'imprégnation du support est de préférence effectuée par la méthode d'imprégnation dite "à sec" bien connue de l'homme du métier. L'imprégnation peut être effectuée en une seule étape par une solution contenant l'ensemble des éléments constitutifs du catalyseur final.

Le bore et/ou le silicium et/ou le phosphore et éventuellement l'élément choisi dans le groupe VIIA, de préférence le fluor, peuvent être introduits dans le catalyseur à tout niveau de la préparation et selon toute technique connu de l'homme du métier.

Une méthode préférée selon l'invention consiste à déposer le ou les éléments promoteurs choisis, par exemple le couple bore-silicium, sur le précurseur calciné ou non, de préférence calciné. Pour cela on prépare une solution aqueuse d'au moins un sel de bore tel que le biborate d'ammonium ou le pentaborate d'ammonium en milieu alcalin et en présence d'eau oxygénée et on procède à une imprégnation dite à sec, dans laquelle on rempli le volume des pores du précurseur par la solution contenant par exemple le bore. Dans le cas où l'on dépose par exemple également du silicium, on utilisera par exemple une solution d'un composé du silicium de type silicone.

Le dépôt de bore et de silicium peut aussi être réalisé de manière simultanée en utilisant par exemple une solution contenant un sel de bore et un composé du silicium de type silicone. Ainsi, par exemple dans le cas où le précurseur est un catalyseur de type nickel-molybdène supporté sur alumine et zéolithe Y partiellement amorphe, il est possible d'imprégner ce précurseur par de la solution aqueuse de biborate d'ammonium et de silicone Rhodorsil E1P de la société Rhône Poulenc de procéder à un séchage par exemple à 80°C, puis d'imprégner par une solution de fluorure d'ammonium, de procéder à un séchage par exemple à 80°C, et de procéder à une calcination par exemple et de façon préférée sous air en lit traversé, par exemple à 500°C pendant 4 heures. On dépose ensuite l'élément du groupe VB selon toute méthode connue de l'homme de métier.

L'élément promoteur choisi dans le groupe formé par le silicium, le bore et le phosphore et l'élément choisi parmi les ions halogénures du groupe VIIA, peuvent être introduits par une ou plusieurs opérations d'imprégnation avec excès de solution sur le précurseur calciné.

Ainsi, par exemple, il est possible d'imprégner le précurseur par une solution aqueuse de biborate d'ammonium ou de silicone Rhodorsil E1P de la société Rhône Poulenc de procéder à un séchage par exemple à 80°C, puis d'imprégner par une solution de fluorure d'ammonium, de procéder à un séchage par exemple à 80°C, et de procéder à une calcination par exemple et de façon préférée sous air en lit traversé, par exemple à 500°C pendant 4 heures. On dépose ensuite l'élément du groupe VB selon toute méthode connue de l'homme de métier.

D'autres séquences d'imprégnation peuvent être mises en oeuvre pour obtenir le catalyseur selon l'invention.

Il est par exemple possible d'imprégner le précurseur avec une solution contenant un des éléments promoteurs (P, B, Si), de sécher, de calciner puis d'imprégner le solide obtenu avec la solution contenant un autre élément promoteur, de sécher, de calciner. Il est aussi possible d'imprégner le précurseur avec une solution contenant deux des éléments promoteurs, de sécher, de calciner puis d'imprégner le solide obtenu avec la solution contenant un autre élément promoteur, de sécher, et de procéder à une calcination finale. On dépose ensuite l'élément du groupe VB selon toute méthode connue de l'homme de métier.

Le catalyseur de la présente invention peut donc éventuellement renfermer au moins un élément du groupe VIII tel que fer, cobalt, nickel, ruthénium, rhodium, palladium, osmium, iridium ou platine. Parmi les métaux du groupe VIII on préfère employer un métal choisi dans le groupe formé par le fer, le cobalt, le nickel et le ruthénium. Le catalyseur selon l'invention peut également renfermer au moins un élément du groupe VIB, de préférence le tungstène et le molybdène. D'une manière avantageuse on utilise les associations de métaux suivantes : nickel-molybdène, cobalt-molybdène, fer-molybdène, fer-tungstène, nickel-tungstène, cobalt-tungstène, les associations préférées sont : nickel-molybdène, cobalt-molybdène, nickel-tungstène. Il est également possible d'utiliser des associations de trois métaux par exemple nickel-cobalt-molybdène. D'une manière avantageuse on utilise les associations de métaux suivantes :

nickel-niobium-molybdène, cobalt-niobium-molybdène, fer-niobium-molybdène, nickel-niobium-tungstène, cobalt-niobium-tungstène, fer-niobium-tungstène, les associations préférés étant : nickel-niobium-molybdène, cobalt-niobium-molybdène. Il est également possible d'utiliser des associations de quatre métaux par exemple nickel-cobalt-niobium-molybdène. On peut également utiliser des associations contenant un métal noble tel que ruthénium-niobium-molybdène, ou encore ruthénium-nickel-niobium-molybdène.

Dans le cas où les éléments sont introduits en plusieurs imprégnations des sels précurseurs correspondants, une étape de calcination intermédiaire du catalyseur devra être effectuée à une température, par exemple et préférentiellement, comprise entre 250 et 600 °C.

L'imprégnation du molybdène peut être facilitée par ajout d'acide phosphorique dans les solutions de paramolybdate d'ammonium, ce qui permet d'introduire aussi le phosphore de façon à promouvoir l'activité catalytique. D'autres composés du phosphore peuvent être utilisés comme il est bien connu de l'homme du métier.

L'imprégnation du niobium peut être facilitée par ajout d'acide oxalique et éventuellement d'oxalate d'ammonium dans les solutions de d'oxalate de niobium. D'autres composés peuvent être utilisés pour améliorer la solubilité et faciliter l'imprégnation du niobium comme il est bien connu de l'homme du métier.

Les sources d'élément du groupe VB qui peuvent être utilisées sont bien connues de l'homme du métier. Par exemple, parmi les sources de niobium, on peut utiliser les oxydes, tel que le pentaoxyde de diniobium $Nb_2O_5$, l'acide niobique $Nb_2O_5.H_2O$, les hydroxydes de niobium et les polyoxoniobates, les alkoxydes de niobium de formule $Nb(OR_1)_3$ où $R_1$ est un radical alkyle, l'oxalate de niobium $NbO(HC_2O_4)_5$, le niobate d'ammonium. On utilise de préférence l'oxalate de niobium ou le niobate d'ammonium.

La source de phosphore préférée est l'acide orthophosphorique $H_3PO_4$, mais ses sels et esters comme les phosphates d'ammonium conviennent également. Le phosphore peut par exemple être introduit sous la forme d'un mélange d'acide phosphorique et un composé organique basique contenant de l'azote tels que l'ammoniaque, les amines primaires et secondaires, les amines cycliques, les composés de la famille de la pyridine et des quinoléines et les composés de la famille du pyrrole.

De nombreuses sources de silicium peuvent être employées. Ainsi, on peut utiliser l'orthosilicate d'éthyle $Si(OEt)_4$, les siloxanes, les polysiloxanes, les silicones, les émulsions de silicones, les silicates d'halogénures comme le fluorosilicate d'ammonium $(NH_4)_2SiF_6$ ou le fluorosilicate de sodium $Na_2SiF_6$. L'acide silicomolybdique et ses sels, l'acide silicotungstique et ses sels peuvent également être avantageusement employés. Le silicium peut être ajouté par exemple par imprégnation de silicate d'éthyle en solution dans un mélange eau/alcool. Le silicium peut être ajouté par exemple par imprégnation d'un composé du silicium de type silicone mis en suspension dans l'eau.

La source de bore peut être l'acide borique, de préférence l'acide orthoborique $H_3BO_3$, le biborate ou le pentaborate d'ammonium, l'oxyde de bore, les esters boriques. Le bore peut par exemple être introduit sous la forme d'un mélange d'acide borique, d'eau oxygénée et un composé organique basique contenant de l'azote tels que l'ammoniaque, les amines primaires et secondaires, les amines cycliques, les composés de la famille de la pyridine et des quinoléines et les composés de la famille du pyrrole. Le bore peut être introduit par exemple par une solution d'acide borique dans un mélange eau/alcool.

Les sources d'éléments du groupe VIIA qui peuvent être utilisées sont bien connues de l'homme du métier. Par exemple, les anions fluorures peuvent être introduits sous forme d'acide fluorhydrique ou de ses sels. Ces sels sont formés avec des métaux alcalins, l'ammonium ou un composé organique. Dans ce dernier cas, le sel est avantageusement formé dans le mélange réactionnel par réaction entre le composé organique et l'acide fluorhydrique. Il est également possible d'utiliser des composés hydrolysables pouvant libérer des anions fluorures dans l'eau, comme le fluorosilicate d'ammonium $(NH_4)_2SiF_6$, le tétrafluorure de silicium $SiF_4$ ou de sodium $Na_2SiF_6$. Le fluor peut être introduit par exemple par imprégnation d'une solution aqueuse d'acide fluorhydrique ou de fluorure d'ammonium.

Les sources d'éléments du groupe VIB qui peuvent être utilisées sont bien connues de l'homme du métier. Par exemple, parmi les sources de molybdène et de tungstène, on peut utiliser les oxydes et hydroxydes, les acides molybdiques et tungstiques et leurs sels en particulier les sels d'ammonium tels que le molybdate d'ammonium, l'heptamolybdate d'ammonium, le tungstate d'ammonium, l'acide phosphomolybdique, l'acide phosphotungstique et leurs sels, l'acide silicomolybdique, l'acide silicotungstique et leurs sels. On utilise de préférence les oxydes et les sels d'ammonium tels que le molybdate d'ammonium, l'heptamolybdate d'ammonium et le tungstate d'ammonium.

Les sources d'éléments du groupe VIII qui peuvent être utilisées sont bien connues de l'homme du métier. Par exemple, pour les métaux non nobles on utilisera les nitrates, les sulfates, les phosphates, les halogénures par exemple, chlorures, bromures et fluorures, les carboxylates par exemple acétates et carbonates. Pour les métaux nobles on utilisera les halogénures, par exemple les chlorure, les nitrates, les acides tels que l'acide chloroplatinique, les oxychlorures tels que l'oxychlorure ammoniacal de ruthénium.

Les catalyseurs obtenus par la présente invention sont généralement mis en forme. Les grains alors obtenus présentent différentes formes et dimensions. Ils sont utilisés en général sous la forme d'extrudés cylindriques ou polylobés tels que bilobés, trilobés, polylobés de forme droite ou torsadée, mais peuvent éventuellement être fabriqués et employés sous la forme de poudre concassées, de tablettes, d'anneaux, de billes, de roues. Ils présentent une surface spécifique mesurée par adsorption d'azote selon la méthode BET (Brunauer, Emmett, Teller, J. Am. Chem. Soc., vol. 60, 309-316 (1938)) comprise entre 50 et 600 m$^2$/g, un volume poreux mesuré par porosimétrie au mercure compris entre 0,2 et 1,5 cm$^3$/g et une distribution en taille de pores pouvant être monomodale, bimodale ou polymodale.

Les catalyseurs obtenus par la présente invention sont utilisés pour la conversion, en particulier l'hydroconversion de charges hydrocarbonées telles que les coupes pétrolières et par exemple l'hydrocraquage. Le catalyseur d'hydroconversion contient alors au moins un élément hydro-déshydrogénant. Les charges employées dans le procédé sont des essences, des kérosènes, des gas-oils, des gas-oils sous vide, des résidus atmosphériques, des résidus sous vide, des distillats atmosphériques, des distillats sous vide, des fuels lourds, des huiles, des cires et des paraffines, des huiles usagées, des résidus ou des bruts désasphaltés, des charges provenant des procédés de conversions thermiques ou catalytiques et leurs mélanges. Elles contiennent des hétéroatomes tels que soufre, oxygène et azote et éventuellement des métaux.

Les catalyseurs ainsi obtenus sont utilisés avantageusement pour l'hydrocraquage en particulier de coupes hydrocarbonées lourdes de type distillats sous vide, résidus désasphaltés ou hydrotraités ou équivalents. Les coupes lourdes sont de préférence constituées d'au moins de 80% en volume de composés dont les points d'ébullition sont d'au moins 350°C et de préférence entre 350 et 580 °C (c'est-à-dire correspondant à des composés contenant au moins 15 à 20 atomes de carbone). Elles contiennent généralement des hétéroatomes tels que soufre et azote. La teneur en azote est usuellement comprise entre 1 et 5000 ppm poids et la teneur en soufre entre 0,01 et 5% poids.

Les conditions de l'hydrocraquage telles que température, pression, taux de recyclage d'hydrogène, vitesse volumique horaire, pourront être très variables en fonction de la nature de la charge, de la qualité des produits désirés et des installations dont dispose le raffineur. La température est en général supérieure à 200°C et souvent comprise entre 250°C et 480°C. La pression est supérieure à 0,1 MPa et souvent supérieure à 1 MPa. La quantité d'hydrogène est au minimum de 50 litres d'hydrogène par litre de charge et souvent compris entre 80 et 5000 litres d'hydrogène par litre de charge. La vitesse volumique horaire est comprise en général entre 0,1 et 20 volume de charge par volume de catalyseur et par heure (h$^{-1}$).

Les catalyseurs de la présente invention sont de préférence soumis à un traitement de sulfuration permettant de transformer, au moins en partie, les espèces métalliques en sulfure avant leur mise en contact avec la charge à traiter. Ce traitement d'activation par sulfuration est bien connu de l'homme du métier et peut être effectué par toute méthode déjà décrite dans la littérature.

La sulfuration des solides (catalyseurs) contenant au moins un élément du groupe VB sous forme oxyde se révèle être très difficile par la plupart des méthodes classiques de sulfuration connues de l'homme du métier. En effet les catalyseurs contenant au moins un élément du groupe VB supporté sur une matrice du type alumine sont connus pour être très difficiles à sulfurer une fois que l'association élément du groupe VB-alumine a été calcinée à une température supérieure à 200°C.

La sulfuration peut se faire par toute méthode connue de l'homme du métier et à toute étape de la préparation. La méthode préférée selon l'invention consiste à chauffer le catalyseur non calciné sous flux d'un mélange hydrogène-hydrogène sulfuré ou sous flux d'un mélange azote-hydrogène sulfuré ou encore sous hydrogène sulfuré pur à une température comprise entre 150 et 800°C, de préférence entre 250 et 600°C, généralement dans une zone réactionnelle à lit traversé. Ainsi, par exemple dans le cas préféré où le métal du groupe VB est le niobium et où le métal du groupe VIB est le molybdène, il est possible d'imprégner le support, par de l'heptamolybdate d'ammonium, de procéder à un séchage à 80°C, puis d'imprégner par de l'oxalate de niobium, de procéder à un séchage à 80°C, et de procéder à une sulfuration par exemple et de façon préférée par H$_2$S en lit traversé, par exemple à 500°C pendant 10 heures.

La source de soufre peut être le soufre élémentaire, le sulfure de carbone, l'hydrogène sulfuré, les hydrocarbures soufrés tels que le diméthyl sulfure, le diméthyl disulfure, les mercaptans, les composés du thiophène, les thiols, les polysulfures tels que par exemple le ditertiononylpolysulfure ou TPS-37 de la société ATOCHEM, les coupes pétrolières riches en soufre telles que l'essence, le kérosène, le gazole, seuls ou en mélanges avec un des composés soufrés cité ci-dessus. La source de soufre préférée est le sulfure de carbone ou l'hydrogène sulfuré.

Le catalyseur de la présente invention peut être avantageusement employé pour l'hydrocraquage de charges hydrocarbonnées, en particulier des coupes de type distillats sous vide, plus particulièrement par exemple, les coupes à teneur en soufre supérieure à 0,1 % poids et à teneur en azote supérieure à 10 ppm.

Dans un premier mode de réalisation ou d'hydrocraquage partiel encore appelé hydrocraquage doux, le niveau de conversion est inférieur à 55%. Le catalyseur selon l'invention est alors employé à une température en général supérieure ou égale à 230°C et de préférence comprise entre 300°C et 480°C, et souvent comprise entre 350°C et 450°C. La pression est en général supérieure à 2MPa et de préférence supérieure à 3MPa, et inférieure à 12 MPa, de préférence inférieure à 10 MPa. La quantité d'hydrogène est au minimum de 100 litres d'hydrogène par litre de charge et souvent comprise entre 200 et 3000 litres d'hydrogène par litre de charge. La vitesse volumique horaire est comprise en général entre 0,1 et 10h$^{-1}$. Dans ces conditions, les catalyseurs de la présente invention présentent une meilleure activité en conversion, en hydrodésulfuration et en hydrodéazotation que les catalyseurs commerciaux.

Dans un second mode de réalisation. le catalyseur de la présente invention peut être employé pour l'hydrocraquage partiel, avantageusement dans des conditions de pression d'hydrogène modérée, de coupes par exemple de type distillats sous vide fortement chargées en soufre et azote qui ont été préalablement hydrotraitées. Dans ce mode d'hydrocraquage le niveau de conversion est inférieur à 55%. Dans ce cas le procédé de conversion de coupe pétrolière se déroule en deux étapes, les catalyseurs selon l'invention étant utilisés dans la deuxième étape. Le catalyseur de la première étape a une fonction d'hydrotraitement et comprend une matrice de préférence à base d'alumine, et de préférence ne contenant pas de zéolithe, et au moins un métal ayant une fonction hydrogénante. Ladite matrice est une matrice minérale poreuse amorphe ou mal cristallisée de type oxyde. On peut citer à titre d'exemple non limitatif les alumines, les silices, les silice-alumine. On peut choisir également les aluminates. On préfère utiliser des matrices contenant de l'alumine, sous toutes ces formes connues de l'homme du métier, et de manière encore plus préférée les alumines, par exemple l'alumine gamma. La fonction d'hydrotraitement est assurée par au moins un métal ou composé de métal du groupe VIII tels que par exemple le nickel et le cobalt. On peut utiliser une combinaison d'au moins un métal ou composé de métal du groupe VIB (par exemple le molybdène ou le tungstène) et d'au moins un métal ou composé de métal du groupe VIII (par exemple le cobalt ou le nickel) de la classification périodique des éléments. La concentration totale en oxydes de métaux des groupes VIB et VIII est préférentiellement comprise entre 5 et 40 % en poids et de manière très préférée entre 7 et 30 % en poids et le rapport pondéral exprimé en oxyde métallique en métal (ou métaux) du groupe VIB sur métal (ou métaux) du groupe VIII est préférentiellement compris entre 1,25 et 20 et de manière très préférée entre 2 et 10. De plus, ce catalyseur peut contenir du phosphore. La teneur en phosphore, exprimée en concentration en pentaoxyde de diphosphore $P_2O_5$ sera préférentiellement d'au plus 15%, de manière plus préférée comprise entre 0,1 et 15 % en poids et de manière très préférée comprise entre 0,15 et 10% en poids. Il peut également contenir du bore dans un rapport B/P = 1,05 - 2 (atomique), la somme des teneurs en B et P exprimée en oxydes étant préférentiellement comprise entre 5 et 15 % poids.

La première étape se déroule généralement à une température de 350-460°C, de préférence 360-450°C, une pression d'au moins 2MPa ; et de préférence au moins 3 MPa, une vitesse volumique horaire de 0,1-5h$^{-1}$ et de préférence 0.2-2h$^{-1}$ et avec une quantité d'hydrogène d'au moins 100 litres d'hydrogène par litre de charge, et de préférence 260-3000 litres d'hydrogène par litre de charge.

Pour l'étape de conversion avec le catalyseur selon l'invention (ou seconde étape d'hydrocraquage), les températures sont en général supérieures ou égales à 230°C et souvent comprises entre 300°C et 480°C, de préférence entre 330°C et 450°C. La pression est en général d'au moins 2MPa et de préférence d'au moins 3MPa, et inférieure à 12MPa, de préférence inférieure à 10MPa. La quantité d'hydrogène est au minimum de 100 litres d'hydrogène par litre décharge et souvent comprise entre 200 et 3000 litres d'hydrogène par litre de charge. La vitesse volumique horaire est comprise en général entre 0,15 et 10h$^{-1}$. Dans ces conditions, les catalyseurs de la présente invention présentent une meilleure activité en conversion, en hydrodésulfuration, en hydrodéazotation et une meilleure sélectivité en distillats moyens .que les catalyseurs commerciaux. La durée de vie des catalyseurs est également améliorée dans la plage de pression modérée:

Dans un autre mode de réalisation, le catalyseur de la présente invention peut être employé pour l'hydrocraquage dans des conditions de pression d'hydrogène élevées d'au moins 5 MPa. Les coupes traitées sont par exemple de type distillats sous vide fortement chargée en soufre et azote qui ont été préalablement hydrotraitées. Dans ce mode d'hydrocraquage le, niveau de conversion est supérieur à 55%. Dans ce cas, le procédé de conversion de coupe pétrolière se déroule en deux étapes, le catalyseur selon l'invention étant utilisé dans la deuxième étape.

Le catalyseur de la première étape a une fonction d'hydrotraitement et comprend une matrice de préférence à base d'alumine, et de préférence ne contenant pas de zéolithe, et au moins un métal ayant une fonction hydrogénante. Ladite matrice peut également être constituée de, ou renfermer, de la silice, de la silice-alumine, de l'oxyde de bore, de la magnésie, de la zircone, de l'oxyde de titane ou une combinaison de ces oxydes. La fonction hydro-deshydrogénante est assurée par au moins un métal ou composé de métal du groupe VIII tels que le nickel et le cobalt notamment. On peut utiliser une combinaison d'au moins un métal ou composé de métal du groupe VI (notamment le molybdène ou le tungstène) et d'au moins un métal ou composé de métal du groupe VIII (notamment le cobalt ou le nickel) de la classification périodique des éléments. La concentration totale en oxydes de métaux des groupes VI et VIII est comprise entre 5 et 40 % en poids et de préférence entre 7 et 30 % en poids et le rapport pondéral exprimé en oxyde métallique en métal (ou métaux) du groupe VI sur métal (ou métaux) du groupe VIII est compris entre 1,25 et 20 et de préférence entre 2 et 10. De plus, ce catalyseur peut contenir du phosphore. La teneur en phosphore, exprimée en concentration en pentaoxyde de diphosphore $P_2O_5$ sera d'au plus 15% généralement, de préférence comprise entre 0,1 et 15 % en poids et de préférence comprise entre 0,15 et 10% en poids. Il peut également contenir du bore dans un rapport B/P = 1,02-2 (atomique), la somme des teneurs en B et P exprimée en oxydes étant de 5-15 % poids.

La première étape se déroule généralement à une température de 350-460°C, de préférence 360-450°C, une pression d'au moins 2MPa, et de préférence d'au moins 3MPa, une vitesse volumique horaire de 0,1-5h$^{-1}$ et de préférence 0,2-2h$^{-1}$ et avec une quantité d'hydrogène d'au moins 100 litres d'hydrogène par litre de charge, et de préférence 260-3000 litres d'hydrogène par litre de charge.

Pour l'étape de conversion avec le catalyseur selon l'invention (ou seconde étape), les températures sont en général supérieures ou égales à 230°C et souvent comprises entre 300°C et 480°C, et de manière préférée entre 300°C et 440°C. La pression est en général supérieure à 5MPa et de préférence supérieure à 7MPa. La quantité d'hydrogène est au minimum de 100 litres d'hydrogène par litre de charge et souvent comprise entre 200 et 3000 litres d'hydrogène par litre de charge. La vitesse volumique horaire est comprise en général entre 0,15 et 10h$^{-1}$.

Dans ces conditions, les catalyseurs de la présente invention présentent une meilleure activité en conversion que les catalyseurs commerciaux, même pour des teneurs en zéolithe considérablement plus faibles que celles des catalyseurs commerciaux.

Les catalyseurs obtenus par la présente invention sont aussi utilisés pour l'hydroraffinage de charges hydrocarbonées telles que les coupes pétrolières, les coupes issues du charbon ou les hydrocarbures produits à partir du gaz naturel. Les réactions principales mises en jeu sont l'hydrogénation des aromatiques, l'hydrodéazotation, l'hydrodéoxygénation, l'hydrodésulfuration, l'hydrodémétallisation, accompagnées le plus souvent d'un hydrocraquage. Les charges hydrocarbonées contiennent des composés aromatiques, et/ou oléfiniques, et/ou naphténiques, et/ou paraffiniques, et éventuellement des métaux, et/ou de l'azote, et/ou de l'oxygène et/ou du soufre. Dans ces utilisations, les catalyseurs obtenus par la présente invention présentent une activité améliorée par rapport à l'art antérieur.

Les charges employées dans le procédé sont des essences, des gas-oils, des gas-oils sous vide, des résidus atmosphériques, des résidus sous vide, des distillats atmosphériques, des distillats sous vide, des fuels lourds, des huiles, des cires et des paraffines, des huiles usagées, des résidus ou des bruts désasphaltés, des charges provenant des procédés de conversions thermiques ou catalytiques et leurs mélanges. Elles contiennent des hétéroatomes tels que soufre, oxygène et azote et au moins un métal. Les coupes lourdes, telles que et à titre d'exemples non exhaustif, les distillats sous vide, les résidus désasphaltés ou hydrotraités ou équivalents, sont de préférence constituées d'au moins de 80% en volume de composés dont les points d'ébullition sont d'au moins 350°C et de préférence entre 350 et 580 °C (c'est-à-dire correspondant à des composés contenant au moins 15 à 20 atomes de carbone). Elles contiennent généralement des hétéroatomes tels que soufre et azote. La teneur en azote est usuellement comprise entre 1 et 5000 ppm poids et la teneur en soufre entre 0,01 et 5% poids.

Les catalyseurs de la présente invention sont aussi avantageusement utilisés de préférence lors du prétraitement des charges de craquage catalytique et en première étape d'un hydrocraquage ou d'une hydroconversion douce. Ils sont alors usuellement employés en association avec un catalyseur acide, zéolithique ou non zéolithique pour la deuxième étape du traitement.

Les conditions de l'hydroraffinage telles que température, pression, taux de recyclage d'hydrogène, vitesse volumique horaire, pourront être très variables en fonction de la nature de la charge, de la qualité des produits désirés et des installations dont dispose le raffineur. La température est en général supérieure à 200°C et souvent comprise entre 250°C et 480°C. La pression est supérieure à 0,05 MPa et souvent supérieure à 1 MPa. Le taux de recyclage d'hydrogène est au minimum de 80 et souvent compris entre 50 et 5000 normaux litres d'hydrogène par litre de charge. La vitesse volumique horaire est comprise en général entre 0,1 et 20 volume de charge par volume de catalyseur et par heure.

Les catalyseurs de la présente invention sont de préférence soumis à un traitement de sulfuration permettant de transformer, au moins en partie, les espèces métalliques en sulfure avant leur mise en contact avec la charge à traiter. Ce traitement d'activation par sulfuration est bien connu de l'Homme du métier et peut être effectué par toute méthode déjà décrite dans la littérature.

Une méthode de sulfuration classique bien connue de l'homme du métier consiste à chauffer le mélange de solides sous flux d'un mélange d'hydrogène et d'hydrogène sulfuré ou sous flux d'un mélange d'azote et d'hydrogène sulfuré à une température comprise entre 150 et 800°C, de préférence entre 250 et 600°C, généralement dans une zone réactionnelle à lit traversé.

Les résultats qui importent au raffineur sont l'activité en HDS, en HDN et en conversion. Les objectifs fixés doivent être réalisés dans des conditions compatibles avec la réalité économique. Ainsi le raffineur cherche-t-il à diminuer la température, la pression, le taux de recyclage d'hydrogène et à maximiser la vitesse volumique horaire. il est connu que l'activité peut être augmentée par une élévation de température, mais c'est souvent au détriment de la stabilité du catalyseur. La stabilité ou durée de vie s'améliore avec une augmentation de la pression ou du taux de recyclage d'hydrogène, mais ceci se fait au détriment de l'économie du procédé.

Les exemples suivants illustrent la présente invention sans toutefois en limiter la portée.

Exemple 1 : Préparation d'un support de catalyseur d'hydrocraquage contenant une zéolithe Y partiellement amorphe

Une zéolithe désaluminée ultrastable commerciale USY de rapport molaire Si/Al global égal à 15,2, de rapport Si/Al de charpente 29, de paramètre cristallin égal à 24,29Å, contenant 0.03% poids de Na, ayant un taux de pics de 0,48 et présentant une fraction cristalline de 85%, est amorphisée par un traitement hydrothermique à 620°C pendant 5h en présence d'une pression partielle de vapeur d'eau égale à 0,5 bars absolus. La zéolithe est ensuite soumise à une attaque acide réalisée dans les conditions suivantes : normalité de l'acide 0.85N, durée de 3h et température égale à 95°C. Un dernier traitement hydrothermique identique au premier avec une pression partielle de vapeur d'eau égale à 0.02bars est appliqué à la zéolithe. A l'issue de ces traitements la zéolithe partiellement amorphe a un taux de pics de 0,26, une fraction cristalline de 44%, un rapport Si/Al global de 72, et un rapport Si/Al$^{IV}$ de charpente de 80, un volume poreux de 0,35ml d'azote liquide par gramme dont 29% sont constitués de pores dont les diamètres sont au moins égaux à 5 nanomètre (50 Å). Un support de catalyseur d'hydrocraquage contenant cette zéolithe Y est fabriqué de la manière suivante :

On mélange 50 grammes de la zéolithe Y partiellement amorphe décrite ci-dessus à 50 grammes d'une matrice composée de boehmite tabulaire ultrafine ou gel d'alumine commercialisée sous le nom SB3 par la société Condéa Chemie Gmbh. Ce mélange de poudre a été ensuite mélangé à une solution aqueuse contenant de l'acide nitrique à 66% (7% poids d'acide par gramme de gel sec) puis malaxé pendant 15 minutes. A l'issue de ce malaxage, la pâte obtenue est passée à travers une filière ayant des orifices cylindriques de diamètre égal à 1,4 mm. Les extrudés sont ensuite séchés une nuit à 120°C sous air puis calcinés à 550°C sous air.

Exemple 2 : Préparation de catalyseurs contenant une zéolithe Y partiellement amorphe

Les extrudés de support, contenant une zéolithe Y partiellement amorphe, préparés dans l'exemple 1 sont imprégnés à sec par une solution aqueuse d'un mélange d'heptamolybdate d'ammonium et de nitrate de nickel, séchés une nuit à 120°C sous air et enfin calcinés sous air à 550°C. Les teneurs pondérales en oxydes du catalyseur NiMoY$_2$ obtenus sont indiquées dans le tableau 1.

Les extrudés sont imprégnés à sec par une solution aqueuse d'un mélange d'heptamolybdate d'ammonium, de nitrate de nickel et d'acide orthophosphorique, séchés une nuit à 120°C sous air et enfin calcinés sous air à 550°C. Les teneurs pondérales en oxydes du catalyseur NiMoPY$_2$ obtenus sont indiquées dans le tableau 1.

Nous avons ensuite imprégné l'échantillon de catalyseur NiMoPY$_2$ par une solution aqueuse renfermant du biborate d'ammonium et l'émulsion de silicone Rhodorsil EP1, et obtenu le catalyseur NiMoPBSiY$_2$. Les teneurs finales en oxydes des catalyseurs ainsi préparés sont indiquées dans le tableau 1.

L'analyse, par microsonde électronique, des catalyseurs NiMoPBSiY$_2$ et NiMoNbPBSiY$_2$ montre que le silicium ajouté au catalyseur selon l'invention est principalement localisé sur la matrice et se trouve sous forme de silice amorphe.

Exemple 3 : Préparation de catalyseurs contenant une zéolithe Y partiellement amorphe et du niobium

Les catalyseurs de l'exemple 2 ci-dessus sont imprégnés par une solution aqueuse d'oxalate de niobium Nb (HC$_2$O$_4$)$_5$, d'acide oxalique et d'oxalate d'ammonium. La solution aqueuse contenant le niobium est préparée à partir de 1330 ml d'eau dans laquelle on dissous 33g d'acide oxalique, 37,2 g d'oxalate d'ammonium et 92,3 g d'oxalate de niobium. Ceci permet de déposer environ 5%, poids de Nb sur le catalyseur. Pour préparer la solution, on dissous dans un premier temps le mélange acide oxalique et oxalate d'ammonium et lorsque la solution est limpide on chauffe la dite solution à 55°C et on ajoute l'oxalate de niobium. On complète ensuite en eau pour obtenir 1330 ml de solution.

Les catalyseurs de l'exemple 2 ci dessus sont imprégnés par la méthode dite avec excès de solution. Les 1330 ml de solution sont mis en contact avec 380 g de catalyseur. A bout de deux heures on récupère les extrudés. Ceux-ci sont ensuite séchés une nuit à 120°C sous un courant d'air sec. Les teneurs finales en oxydes des catalyseurs NiMoNbY$_2$, NiMoNbPY$_2$ et NiMoNbPBSiY$_2$ ainsi obtenus sont indiquées dans le tableau 1.

Tableau 1 :

| Caractéristiques des catalyseurs de la série Y$_2$ | | | | | | |
|---|---|---|---|---|---|---|
| Catalyseur | *NiMoY$_2$* | NiMoNbY$_2$ | *NiMoPY$_2$* | NiMoNbPY$_2$ | *NiMoPBSiY$_2$* | NiMo NbPBSiY$_2$ |
| MoO$_3$ (% pds) | 13,9 | 12,8 | 13,4 | 12,2 | 12,3 | 11,6 |
| Nb$_2$O$_5$ (% pds) | 0 | 6,5 | 0 | 6,4 | 0 | 6,4 |
| NiO (% pds) | 2,9 | 3,0 | 2,9 | 2,9 | 2,8 | 2,8 |
| P$_2$O$_5$ (% pds) | 0 | 0 | 4,6 | 4,4 | 4,2 | 4,3 |
| B$_2$O$_3$ (% pds) | 0 | 0 | 0 | 0 | 1,4 | 1,5 |
| SiO$_2$ (% pds) | 41,0 | 38,3 | 39,0 | 36,5 | 40,7 | 37,6 |

Tableau 1 : (suite)

| Caractéristiques des catalyseurs de la série $Y_2$ | | | | | | |
|---|---|---|---|---|---|---|
| Catalyseur | *NiMoY$_2$* | NiMoNbY$_2$ | *NiMoPY$_2$* | NiMoNbPY$_2$ | *NiMoPBSiY$_2$* | NiMo NbPBSiY$_2$ |
| Complément à 100% composé majoritairement de Al$_2$O$_3$ (% pds) | 42,2 | 39,4 | 40,1 | 37,6 | 38,6 | 35,8 |

Exemple 4 : Comparaison des catalyseurs en hydrocraquage d'un gazole sous vide à conversion partielle

Les catalyseurs dont les préparations sont décrites dans les exemples 1 à 3 sont utilisés dans les conditions de l'hydrocraquage à pression modérée sur une charge pétrolière dont les principales caractéristiques sont les suivantes :

| | |
|---|---|
| Densité (20/4) | 0,921 |
| Soufre (% poids) | 2,46 |
| Azote (ppm poids) | 1130 |
| Distillation simulée | |
| point initial | 365°C |
| point 10%, | 430°C |
| point 50 % | 472°C |
| point 90% | 504°C |
| point final | 539°C |
| point d'écoulement | + 39°C |

L'unité de test catalytique comprend deux réacteurs en lit fixe, à circulation ascendante de la charge ("up-flow). Dans le premier réacteur, celui dans lequel la charge passe en premier, on introduit le catalyseur de première étape d'hydrotraitement HTH548 vendu par la société Procatalyse comprenant un élément du groupe VI et un élément du groupe VIII déposés sur alumine. Dans le second réacteur, celui dans lequel la charge passe en dernier, on introduit un des catalyseurs d'hydrocraquage préparés dans les exemples 1 à 3. Dans chacun des réacteurs, on introduit 40 ml de catalyseur. Les deux réacteurs fonctionnement à la même température et à la même pression. Les conditions opératoires de l'unité de test sont les suivantes :

| | |
|---|---|
| Pression totale | 5 MPa |
| Catalyseur d'hydrotraitement | 40 cm$^3$ |
| Catalyseur d'hydrocraquage | 40 cm$^3$ |
| Température | 400°C |
| Débit d'hydrogène | 20 l/h |
| Débit de charge | 40 cm$^3$/h |

Les deux catalyseurs subissent une étape de sulfuration in-situ avant réaction. Notons que toute méthode de sulfuration in-situ ou ex-situ est convenable. Une fois la sulfuration réalisée, la charge décrite ci-dessus peut être transformée.
Les performances catalytiques sont exprimées par la conversion brute à 400°C (CB), par la sélectivité brute en distillats moyens (SB) et par les conversions en hydrodésulfuration (HDS) et en hydrodéazotation (HDN). Ces performances catalytiques sont mesurées sur le catalyseur après qu'une période' de stabilisation, généralement au moins 48 heures, ait été respectée.
La conversion en hydrodésulfuration HDS est prise égale à :

$$HDS = (S_{initial} - S_{effluent}) / S_{initial} * 100 = (24600 - S_{effluent}) / 24600 * 100$$

La conversion en hydrodéazotation HDN est prise égale à :

$$HDN = (N_{initial} - N_{effluent}) / N_{initial} * 100 = (1130 - N_{effluent}) / 130 * 100$$

Dans le tableau suivant, nous avons reporté la conversion en hydrodésulfuration HDS et la conversion en hydrodéazotation HDN pour les catalyseurs.

Tableau 2 :

| Activités catalytiques des catalyseurs à base de zéolithe Y partiellement amorphe en hydrocraquage partiel à 400°C | | HDS (%) | HDN (%) |
|---|---|---|---|
| *NiMoY$_2$* | *NiMo/ Y$_2$* | *98,6* | *95,3* |
| NiMoNbY$_2$ | NiMoNb/ Y$_2$ | 98,9 | 96,8 |
| *NiMoPY$_2$* | *NiMoP/ Y$_2$* | *99,4* | *96,4* |
| NiMoNbPY$_2$ | NiMoNbP/ Y$_2$ | 99,5 | 97,2 |
| *NiMoPBSiY$_2$* | *NiMoPBSi/ Y$_2$* | *99,55* | *98,5* |
| NiMoNbPBSi Y$_2$ | NiMoNbPBSi/ Y$_2$ | 99,8 | 98,9 |

Les résultats du tableau 2 montrent que l'ajout de niobium aux catalyseurs NiMo, NiMoP, NiMoPBSi, supporté sur les supports contenant de l'alumine et une zéolithe Y partiellement amorphe, apporte une amélioration des performances du catalyseur en hydrodésulfuration et surtout en hydrodéazotation.

Exemple 5 : Comparaison des catalyseurs à base de Y partiellement amorphe en hydrocraquage d'un gazole sous vide à haute conversion

Les catalyseurs contenant de la zéolithe Y partiellement amorphe et du niobium dont les préparations sont décrites aux exemples 1 à 3 sont utilisés dans les conditions de l'hydrocraquage à conversion élevée (60-100%). La charge pétrolière est un distillat sous vide hydrotraité dont les principales caractéristiques sont les suivantes :

| | |
|---|---|
| Densité (20/4) | 0,869 |
| Soufre (ppm poids) | 502 |
| Azote (ppm poids) | 10 |
| Distillation simulée | |
| point initial | 298 °C |
| point 10 % | 369 °C |
| point 50 % | 427 °C |
| point 90 % | 481 °C |
| point final | 538 °C |

Cette charge a été obtenue par hydrotraitement d'un distillat sous vide sur un catalyseur HR360 vendu par la société Procatalyse comprenant un élément du groupe VIB et un élément du groupe VIII déposés sur alumine.

Avant l'hydrotraitement, la charge contenait 1500 ppm d'azote et 3,2 % pds de soufre. On ajoute à la charge hydrotraitée un composé soufré précurseur de H$_2$S et un composé azoté précurseur d'ammoniac afin de simuler les pressions partielles H$_2$S et NH$_3$ dans l'étape d'hydrocraquage. La charge ainsi préparée est injectée dans l'unité de test d'hydrocraquage qui comprend un réacteur en lit fixe, à circulation ascendante de la charge ("up-flow"), dans lequel est introduit 80 ml de catalyseur. Avant injection de la charge le catalyseur est sulfuré par un mélange n-hexane/ DMDS + aniline jusqu'à 320 °C. Toute méthode de sulfuration in-situ ou ex-situ peut être employée. Une fois la sulfuration réalisée, la charge décrite ci-dessus peut être transformée. Les conditions opératoires de l'unité de test sont les suivantes :

| | |
|---|---|
| Pression totale | 9 Mpa |
| Catalyseur | 80 cm$^3$ |
| Température | 360-420°C |
| Débit d'hydrogène | 80 l/h |

(suite)

| Débit de charge | 80 cm³/h |
|---|---|

Les performances catalytiques sont exprimées par la température qui permet d'atteindre un niveau de conversion brute de 70 % et par la sélectivité brute en distillats moyen 150-380°C. Ces performances catalytiques sont mesurées sur le catalyseur après qu'une période de stabilisation, généralement au moins 48 heures, ait été respectée. La conversion brute CB est prise égale à :

CB = % pds de 380°C moins de l'effluent

La sélectivité brute SB en distillat moyen est prise égale à :

SB = 100*poids de la fraction (150°C-380°C)/poids de la fraction 380°C moins de

l'effluent

La température de réaction est fixée de façon à atteindre une conversion brute CB égale à 70% poids. Dans le tableau 3 suivant, nous avons reporté la température de réaction et la sélectivité brute pour les catalyseurs décrits dans le tableau 1.

Tableau 3 :

| Activités catalytiques des catalyseurs en hydrocraquage haute conversion (70%) | | | |
|---|---|---|---|
| | | T(°C) | Sélectivité en distillat moyen (150-380°C) (%pds) |
| *NiMoY₂* | *NiMo*/Y₂ | 394 | 70,4 |
| NiMoNbY₂ | NiMoNb/Y₂ | 392 | 70,7 |
| *NiMoPY₂* | *NiMoP*/Y₂ | 393 | 71,2 |
| NiMoNbP Y₂ | NiMoNbP/Y₂ | 389 | 71,5 |
| *NiMoPBSiY₂* | NiMoPBSi/Y₂ | 387 | 72,5 |
| NiMoNbPBSiY₂ | NiMoNbPBSi/Y₂ | 384 | 72,8 |

Le tableau 3 met en évidence que l'utilisation d'un catalyseur selon l'invention contenant de la zéolithe Y partiellement amorphe et du niobium, conduit à des niveaux de conversion plus élevés (c'est à dire des températures de conversion plus basses pour une conversion donnée de 70% poids) par rapport aux catalyseurs contenant la même zéolithe mais ne contenant pas de niobium. Par ailleurs, l'ensemble des catalyseurs contenant une zéolithe Y partiellement amorphe et du niobium selon l'invention conduit à, à iso-conversion de 70% poids, à des sélectivités en distillat moyen (coupe 150-380°C) améliorées par rapport à ceux enregistrés dans le cas des catalyseurs renfermant la même zéolithe mais ne contenant pas de niobium.

**Revendications**

1. Catalyseur comprenant au moins une matrice, au moins un élément du groupe VB, au moins un élément hydro-déshydrogénant du groupe VIB et/ou du groupe VIII et au moins une zéolithe Y partiellement armorphe présentant un taux de pic inférieur à 0,35 et une fraction cristalline inférieure à 60%, exprimée par rapport à une zéolithe de référence sous forme sodique (Na) considérée comme 100% cristallisée, le taux de pic et la fraction cristalline étant déterminés à partir d'un diffractogramme aux rayons X selon la méthode ASTM-D-3906-97.

2. Catalyseur selon la revendication 1 dans lequel le ou les éléments hydro-déshydrogénant sont choisis dans la groupe constitué par le chrome, le molybdène, le tungstène, le fer, le ruthénium, l'osmium, le cobalt, le rhodium, l'iridium, le nickel, le palladium, le platine.

**3.** Catalyseur selon l'une des revendications précédentes dans lequel la zéolithe présente :

- un rapport Si/Al global supérieur à 15,
- un rapport Si/AlV de charpente supérieur ou égal au rapport Si/Al global,
- un volume poreux au moins égal à 0,20 ml/g de solide dont une fraction, comprise entre 8% et 50%, est constituée de pores ayant une diamètre d'au moins 5 nm,

**4.** Catalyseur selon l'une des revendications précédentes dans lequel l'élément du groupe VB est le nobium.

**5.** Catalyseur selon l'une des revendications précédentes renfermant en outre au moins un élément choisi dans le groupe formé par le phosphore, le bore, le silicium.

**6.** Catalyseur selon la revendication 5 dans lequel l'élément est déposé sur le catalyseur et principalement localisé sur la matrice.

**7.** Catalyseur selon l'une des revendications précédentes dans lequel ladite zéolithe Y partiellement amorphe est obtenue par désalumination.

**8.** Catalyseur selon l'une des revendications précédentes renfermant en outre au moins un élément du groupe VII B.

**9.** Catalyseur selon la revendication dans lequel l'élément du groupe VII B est le manganèse.

**10.** Catalyseur selon l'une des revendications précédentes renfermant en % pds par rapport à la masse totale du catalyseur:

- 0,1 à 99,8 % d'au moins une matrice minérale poreuse amorphe ou mal cristallisée de type oxyde,
- 0,1 à 99,8 % de zéolithe Y partiellement amorphe
- 0,1 à 60 % d'au moins un élément du groupe VB
- 0 à 60 % d'au moins un élément hydro-déshydrogénant
- 0 à 20 % d'au moins un élément choisi dans le groupe formé par le bore, le silicium, le phosphore;
- 0 à 20 % d'au moins un élément du groupe VII A
- 0 à 20% d'au moins un élément du groupe VII B

**11.** Catalyseur selon l'une des revendications précédentes dans lequel la matrice est choisie parmi l'alumine, la silice-alumine, les aluminates, la silice.

**12.** Procédé de conversion de charge hydrocarbonée avec un catalyseur selon l'une des revendications précédentes.

**13.** Procédé selon la revendication 12 d'hydrocraquage.

**14.** Procédé selon la revendication 13 d'hydrocraquage à une température supérieures à 200°C, une pression supérieure à 0,1 MPa, une vitesse spatiale de 0,1-20h-1 et un recyclage d'hydrogène d'au moins 50Nl/l de charge.

**15.** Procédé selon la revendication 14 dans lequel la pression est supérieure à supérieure à 2 MPa et inférieure à 12 MPa, la température d'au moins 230°C, la vitesse spatiale de 0,1-10h-1 et le recyclage d'hydrogène d'au moins 100Nl/l de charge, la conversion étant inférieure à 55%.

**16.** Procédé selon la revendication 14 dans lequel la pression est d'au moins 5 MPa et la conversion supérieure à 55 %.

**17.** Procédé selon la revendication 12 pour l'hydroraffinage avec un catalyseur comprenant également au moins un élément hydro-déshydrogénant.

**18.** Procédé selon la revendication 17 opérant à une température supérieure à 200°C, une pression supérieure à 0,05 MPa, un taux de recyclage d'hydrogène d'au moins 80Nl/l de charge et une vitesse volumique horaire de 0,1-20h-1.

**19.** Procédé selon l'une des revendications 12 à 16 dans lequel le catalyseur est préalablement sulfuré.

**20.** Procédé selon l'une des revendications 14 à 16 dans lequel la charge est soumise à un hydrotraitement avant d'être hydrocraquée.

**Claims**

1. Catalyst that comprises at least one matrix, at least one element of group VB, at least one hydro-dehydrogenating element of group VI and/or group VIII and at least one partially amorphous Y zeolite that has a peak rate that is less than 0.35, and a crystalline fraction less than 60% that is expressed relative to a reference zeolite in sodium form (Na) considered as 100% crystalline, peak rate and crystalline fraction being determined from X-ray diffraction according to ASTM D3906-97 method.

2. Catalyst according to claim 1 wherein hydro-dehydrogenating element or elements are selected from the group constituted by chromium, molybdenum, tungsten, iron, ruthenium, osmium, cobalt, rhodium, iridium, nickel, palladium, platinum.

3. Catalyst according to one of the preceding claims in which the zeolite has:

   -- an overall Si/Al ratio that is greater than 15,
   -- an Si/AlIV framework ratio that is greater than or equal to the overall Si/Al ratio,
   -- a pore volume that is at least equal to 0.20 ml/g of solid whose fraction, between 8% and 50%, consists of pores that have a diameter of at least 5 nm.

4. Catalyst according to one of the preceding claims, in which the element of group VB is niobium.

5. Catalyst according to one of the preceding claims that also contains at least one element that is selected from the group that is formed by phosphorus, boron, and silicon.

6. Catalyst according to claim 5, in which the element is deposited on the catalyst and mainly located on the matrix.

7. Catalyst according to one of the preceding claims, wherein said partially amorphous Y zeolite is obtained by dealumination.

8. Catalyst according to one of the preceding claims that also contains at least one element of group VII B.

9. Catalyst according to the claim in which the element of group VII B is manganese.

10. Catalyst according to one of the preceding claims that contain in % by weight relative to the total mass of the catalyst:

    -- 0.1 to 99.8% of at least one oxide-type amorphous or poorly crystallized porous mineral matrix,
    -- 0.1 to 99.8% of partially amorphous Y zeolite,
    -- 0.1 to 60% of at least one element of group VB,
    -- 0 to 60% of at least one hydro-dehydrogenating element,
    -- 0 to 20% of at least one element that is selected from the group that is formed by boron, silicon and phosphorus,
    -- 0 to 20% of at least one element of group VII A,
    -- 0 to 20% of at least one element of group VII B.

11. Catalyst according to one of the preceding claims, in which the matrix is selected from among alumina, silica-alumina, aluminates and silica.

12. Process for conversion of hydrocarbon feedstock with a catalyst according to one of the preceding claims.

13. Process according to claim 12 for hydrocracking.

14. Process according to claim 13 for hydrocracking at a temperature that is higher than 200°C, a pressure that is higher than 0.1 MPa, a volumetric flow rate of 0.1-20 h-1 and a hydrogen recycling of at least 50 NI/l of feedstock.

15. Process according to claim 14, in which the pressure is higher than 2 MPa and less than 12 MPa, the temperature is at least 230°C, the volumetric flow rate is 0.1-10 h-1 and the hydrogen recycling is at least 100 Nl/l of feedstock, whereby the conversion is less than 55%.

16. Process according to claim 14, in which the pressure is at least 5 MPa, and the conversion is greater than 55%.

17. Process according to claim 12 for hydrorefining with a catalyst that also comprises at least one hydro-dehydrogenating element.

18. Process according to claim 17 that operates at a temperature that is higher than 200°C, a pressure that is higher than 0.05 MPa, a hydrogen recycling rate of at least 80 Nl/l of feedstock and an hourly volumetric flow rate of 0.1-20 h$^{-1}$.

19. Process according to one of claims 12 to 16, in which the catalyst is previously sulfurized.

20. Process according to one of claims 14 to 16, in which the feedstock is subjected to hydrotreatment before being hydrocracked.

**Patentansprüche**

1. Katalysator, umfassend wenigstens eine Matrix, wenigstens ein Element der Gruppe V B, wenigstens ein hydrierend-dehydrierendes Element der Gruppe VI B und/oder der Gruppe VIII und wenigstens ein partiell amorpher Zeolith Y mit einem Peak-Verhältnis niedriger als 0,35 und einer kristallinen Fraktion unterhalb von 60%, ausgedrückt als Verhältnis zu einem als zu 100% kristallisiert betrachtetem Referenz-Zeolithen in der Natrium-Form (Na), wobei das Peak-Verhältnis und die kristalline Fraktion ausgehend von einem Röntgendiffraktogramm nach der Methode ASTM-D-3906-97 bestimmt werden.

2. Katalysator gemäß Anspruch 1, bei dem das oder die hydrierenddehydrierende Elemente aus der Gruppe ausgewählt werden, die durch Chrom, Molybdän, Wolfram, Eisen, Ruthenium, Osmium, Cobalt, Rhodium, Iridium, Nickel, Palladium Platin gebildet ist.

3. Katalysator nach einem der vorherigen Ansprüche, bei dem der Zeolith aufweist:

   - ein allgemeines Si/Al-Verhältnis größer als 15
   - ein Si/AllV-Gerüst-Verhältnis größer oder gleich dem allgemeinen Si/Al-Verhältnis,
   - ein Porenvolumen von wenigstens 0,20 ml/g Feststoff, wobei eine Fraktion zwischen 8% und 50% Poren mit einem Durchmesser von wenigstens 5nm aufweist,

4. Katalysator gemäß einem der vorherigen Ansprüche, bei dem das Element der Gruppe V B Nobium ist.

5. Katalysator gemäß einem der vorherigen Ansprüche, enthaltend außerdem wenigstens ein Element, ausgewählt aus der Gruppe gebildet durch Phosphor, Bor, Silizium.

6. Katalysator gemäß Anspruch 5, bei dem das Element auf dem Katalysator abgeschieden ist und sich hauptsächlich auf der Matrix befindet.

7. Katalysator gemäß einem der vorherigen Ansprüche, bei dem besagter partiell amorpher Zeolith Y durch Desalumination erhalten wird.

8. Katalysator gemäß einem der vorherigen Ansprüche, enthaltend außerdem wenigstens ein Element der Gruppe VII B.

9. Katalysator gemäß Anspruch 8 bei dem das Element der Gruppe VII B Mangan ist.

10. Katalysator gemäß einem der vorherigen Ansprüche, enthaltend in Gewichts-% bezogen auf die Katalysatorgesamtmasse:

    - 0,1 bis 99,8% von wenigstens einer porösen mineralischen amorphen oder gering kristallisierten Oxyd-Matrix

- 0,1 bis 99,8% des partiell amorphen Zeolithen Y
- 0,1 bis 60% wenigstens eines Elements der Gruppe V B
- 0 bis 60% wenigstens eines hydrierend-dehydrierenden Elements
- 0 bis 20% wenigstens eines Elements ausgewählt aus der Gruppe gebildet durch Bor, Silizium, Phosphor;
- 0 bis 20% wenigstens eines Elements der Gruppe VII A
- 0 bis 20% wenigstens eines Elements der Gruppe VII B

11. Katalysator gemäß einem der vorherigen Ansprüche, bei dem die Matrix aus Tonerde, kieselsaurer Tonerde, Aluminaten, Kieselerde ausgewählt ist.

12. Verfahren zur Konversion einer teerhaltigen Beschickung mittels eines Katalysators gemäß einem der vorherigen Ansprüche.

13. Verfahren gemäß Anspruch 12 zum Hydrocracken.

14. Verfahren zum Hydrocracken gemäß Anspruch 13, bei einer Temperatur oberhalb von 200°C, einem Druck oberhalb von 0,1MPa, einer Raumgeschwindigkeit von 0,1 bis 20 h$^{-1}$ und einer Wasserstoffrückgewinnung von wenigstens 50Nl/l der Beladung.

15. Verfahren gemäß Anspruch 14, bei dem der Druck oberhalb von 2MPa und unterhalb von 12MPa liegt, die Temperatur wenigstens 230°C beträgt, die Volumengeschwindigkeit zwischen 0,1 und 10h$^{-1}$ beträgt, und die Wasserstoffrückgewinnung wenigstens 100Nl/l der Beladung beträgt, die Konversion unterhalb von 55% liegt.

16. Verfahren gemäß Anspruch 14, bei dem der Druck wenigstens 5MPa beträgt und die Konversion oberhalb von 55% liegt.

17. Verfahren gemäß Anspruch 12 zur Hydroraffinierung mit einem Katalysator, gleichermaßen umfassend wenigstens ein hydrierend-dehydrierendes Element.

18. Verfahren gemäß Anspruch 17, betrieben bei einer Temperatur oberhalb von 200°C, einem Druck oberhalb von 0,05MPa, einer Wasserstoffrückgewinnungsrate von wenigstens 80Nl/l der Beladung und einer stündlichen Volumengeschwindigkeit von 0,1 bis 20h$^{-1}$.

19. Verfahren nach einem der Ansprüche 12 bis 16, bei dem der Katalysator zuerst geschwefelt wird.

20. Verfahren nach einem der Ansprüche 14 bis 16, bei dem die Beladung vor dem Hydrocracken einer Wasserstoffbehandlung unterworfen wird.